# EUROPEAN PATENT APPLICATION

(11) **EP 4 572 049 A1**
(43) Date of publication of application: **18.06.2025**
(21) Application number: 24217532.1
(22) Date of filing: 04.12.2024
(51) Int. Cl.: H02G 15/06, H02G 15/08, H02G 15/18

(54) **POWER CABLE ACCESSORY ASSEMBLY**

(30) Priority: 13.12.2023 EP 23216284
(71) Applicant: NKT HV Cables AB, 371 60 Lyckeby (SE)
(72) Inventor: RAPP, Hans, Alingsås (SE)
(74) Representative: Kransell & Wennborg KB

(57) **Abstract**

Power cable accessory assembly (1.1) comprising: a power cable (3) comprising: a conductor (5), and an electrical insulation layer (7.1) arranged around the conductor (5), wherein the electrical insulation layer (7.1) has a main section (7a) and an end section (7b), the end section (7b) having a smaller diameter than the main section (7a); a fastening device (11.1) engaging with the electrical insulation layer (7.1) in the end section (7b), and a connector (9.1) extending around the end section (7b) of the electrical insulation layer (7.1), the connector (9.1) being mechanically connected to the conductor (5), wherein the connector (9.1) has an inner surface provided with a structure that engages with the fastening device (11.1) to maintain an axially fixed position between the connector (9.1) and the electrical insulation layer (7.1).

## Description

### TECHNICAL FIELD

The present disclosure generally relates to power cable accessories.

### BACKGROUND

When installing power cable accessories such as joints and terminations, the insulation system of the power cable(s) is/are partly stripped off from the conductor(s) close to the conductor joint. This can result in an undesired phenomenon called shrinkback when the cable heats up in operation if the insulation comprises polymeric material. Shrinkback occurs when the insulation pulls back from the conductor joint because of built-in mechanical stresses in the insulation from the manufacturing process. This increases the risk of electrical breakdown due to a translation of the insulation edge from the intended position by design.

EP1 158 638 discloses a solution to reduce the risk of shrinkback. According to EP1 158 638, a cable joint arrangement comprises a connection tube sleeve for mechanically joining two conductors of a first and a second cable, wherein the tube sleeve comprises a circumferential groove on either end. The groove is adapted to interface with an anchor element and the anchor element is further adapted to interface with a cut groove in the cross-linked polyethylene (XLPE) insulation of the cable end such that the tube sleeve is mechanically connected to the insulation of either cable end.

There is a risk of bending of the flanges in the XLPE insulation received by the anchor element. At some shrinkage force and increased temperature, these flanges will disengage from the anchor elements because of the relatively low bending stiffness of XLPE at elevated temperatures.

### SUMMARY

A general object of the present disclosure is to provide a power cable accessory assembly that solves or at least mitigates the problems of the prior art.

There is hence provided a power cable accessory assembly comprising: a power cable comprising: a conductor, and an electrical insulation layer arranged around the conductor, wherein the electrical insulation layer has a main section and an end section, the end section having a smaller diameter than the main section; a fastening device engaging with the electrical insulation layer in the end section, and a connector extending around the end section of the electrical insulation layer, the connector being mechanically connected to the conductor, wherein the connector has an inner surface provided with a structure that engages with the fastening device to maintain an axially fixed position between the connector and the electrical insulation layer.

The connection between the connector and the electrical insulation layer thus prevents or at least reduces shrinkback.

The electrical insulation layer may comprise a thermosetting polymer such as crosslinked polythyelene. Thermosetting polymers are hardened, making the solution in which the connector engages with the electrical insulation layer by means of the fastening device more durable. Alternatively, the electrical insulation layer may be a thermoplastic polymer.

The connector may be made as a single piece. The connector may be a tubular or cylindrical structure in a single piece.

According to one embodiment the fastening device and the connector are connected by means of a bayonet connection. This facilitates engagement of the connector to the electrical insulation layer.

According to one embodiment the connector has an outer surface which is in level with an outer surface of the main section of the electrical insulation layer. The outer surface of the connector may be flush with the outer surface of the main section. Installation of outer layers such as a pre-moulded sleeve comprising polymeric material may thereby be facilitated.

According to one embodiment the end section of the electrical insulation layer has a rounded end section edge.

According to one embodiment the connector has a connector end facing the end section of the electrical insulation layer, wherein the connector end has a rounded connector end edge.

Scratching of an outer layer such as a pre-moulded sleeve during installation may thus be avoided. Further, in certain applications, for example in some cases when the power cable accessory assembly is a termination, the rounded connector end edge of the connector end reduces the risk of partial discharge in this region.

According to one embodiment the electrical insulation layer has a first circumferential groove, wherein the fastening device is arranged in the first circumferential groove.

The first circumferential groove may extend around the entire electrical insulation layer.

According to one embodiment the structure of the inner surface of the connector is a second circumferential groove, wherein the fastening device is arranged in the second circumferential groove.

The second circumferential groove may extend around the entire inner surface of the connector.

According to one embodiment the fastening device comprises a locking ring.

The locking ring may be received tightly in the first circumferential groove.

The locking ring may be received tightly in the second circumferential groove.

According to one embodiment the fastening device comprises fasteners screwed radially through the connector into mechanical engagement with the locking ring.

According to one embodiment the fasteners are spring biased radially outwards.

According to one embodiment the fastening device comprises a plurality of pins, each pin extending in a tangential direction of the conductor inside the electrical insulation layer, wherein each end of each pin protrudes from the electrical insulation layer, and wherein each end is received by the structure in the inner surface of the connector.

According to one embodiment the fastening device comprises at least three pins arranged such that they in cross-section of the power cable form a polygon or form part of a polygon.

According to one embodiment the power cable accessory assembly is a cable joint.

According to one embodiment the power cable accessory assembly is a cable termination system.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a longitudinal section of a portion of a first example of a power cable accessory assembly;
Fig. 2 schematically shows a portion of a second example of a power cable accessory assembly illustrated partially transparent, with the dashed lines showing features not visible from outside;
Fig. 3 shows a cross-sectional view along lines A-A in Fig. 2; and
Fig. 4 schematically shows a longitudinal section. Of a potion of a second example of a power cable accessory assembly.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

Each power cable accessory assembly described herein comprises a power cable, a fastening device, and a connector.

The power cable accessory assembly may be a cable joint or a cable termination system in any examples described herein.

In all examples, the power cable has a conductor and an electrical insulation layer arranged around the conductor.

The connector, or ferrule, is mechanically connected to the conductor. Further, the fastening device engages with the electrical insulation layer in an end section of the electrical insulation layer.

The connector has an inner surface provided with a structure tha engages with the fastening device to maintain an axially fixed position between the connector and the electrical insulation layer.

The power cable may be a medium voltage or a high voltage power cable.

The power cable may be an underground power cable or a submarine power cable.

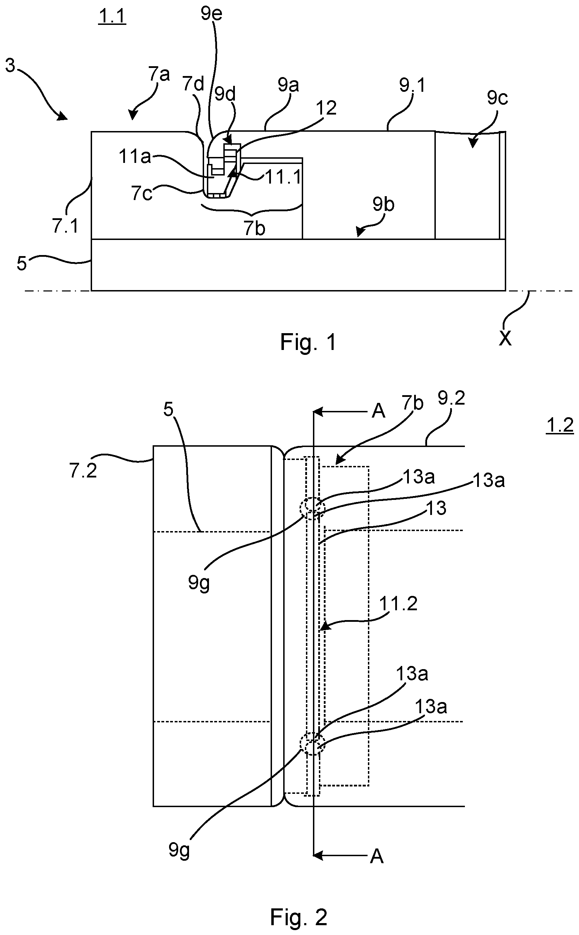

With reference to Fig. 1 a first example of a power cable accessory assembly 1.1 will be described. The power cable accessory assembly 1.1 is shown in a side view, with only a portion thereof being depicted. The longitudinal axis X is a symmetry axis of the power cable accessory assembly 1.1 along the longitudinal axis thereof.

The power cable accessory assembly 1.1 comprises a power cable 3. The power cable 3 comprises a conductor 5. The conductor 5 may for example comprise copper or aluminium.

The power cable 3 comprises an electrical insulation layer 7. The power cable 3 may comprise an insulation system, and the electrical insulation layer 7 may form part of the insulation system. The insulation system may in addition to the electrical insulation layer 7 comprise an inner semiconducting layer (not shown) arranged radially directly inside the electrical insulation layer 7, and an outer semiconducting layer (not shown) arranged radially directly outside the electrica insulation layer 7. This general structure applies to any examples presented herein.

The insulation system may be an extruded insulation system. The electrical insulation layer 7 may comprise a polymeric material, such as a thermosetting polymeric material. Hereto, the electrical insulation layer 7 may be cured. The electrical insulation 7 may for example comprise XLPE. These examples apply to any examples disclosed herein.

The electrical insulation layer 7 has a main section 7a and an end section 7b. The end section 7b has a smaller diameter than the main section. The end section 7b has typically been mechanically processed to attain its shape. Moreover, the outer semiconducting layer has been stripped from the electrical insulation layer 7 in at least the end section 7b. This applies to all examples disclosed herein.

The power cable accessory assembly 1.1 comprises a connector 9.1, of which only a portion of its axial extension is shown in Fig. 1. The connector 9.1 may have a generally cylindrical or a cylindrical shape.

The connector 9.1 may be made as a single piece.

The connector 9.1 is made of an electrically conductive material. The connector 9.1 is typically made of metal, such as copper, aluminium or steel.

The general outer shape and the material of the connector applies to all examples disclosed herein.

The connector 9.1 extends around the end section 7b of the electrical insulation layer 7. Hereto, the connector 9.1 has a connector end section 9a extending around the end section 7b of the electrical insulation layer 7.

The connector 9.1 has at least one axial end provided with an axial opening 9b. The opening 9b at the axial end facing the electrical insulation layer 7 is arranged to receive the conductor 5.

In case the power cable accessory assembly 1.1 is a cable joint, the connector 9.1 has a respective opening 9b at each axial end, arranged to receive the conductor 5 of a respective power cable 3. The power cable accessory assembly 1.1. will in this case normally be symmetric with respect to a radial plane, i.e., another power cable is connected from the right of the connector 9.1. The conductor joint between the conductors 5 is formed in the connector 9.1.

In case the power cable accessory assembly 1.1 is a cable termination system, the connector 9.1 may have a respective opening 9b at each axial end, arranged to receive the conductor 5 of the power cable 3 and e.g., a rod or tube in the opening at its other axial end. The connector 9.1 is thus connected to the conductor 5 and to the rod or tube, which extends to a top bolt of the cable termination system.

The connector 9 may be clamped or screwed to the conductor 5 to set the connector 9 in mechanical and electrical contact with the conductor 5. In the example shown in Fig. 1, the connector 9.1 has radial through-openings 9c each arranged to receive a shear-off screw or similar fastening means, which bears against the outer surface of the conductor 5.

The power cable accessory assembly 1.1. comprises a fastening device 11.1. The fastening device 11.1 may for example comprise a locking ring 11a. The locking ring 11a may be made up of two halves, or of more than two pieces. This facilitates installation of the fastening device 11.1.

The electrical insulation layer 7.1 has a first circumferential groove 7c. The first circumferential groove 7c is arranged in the end section 7b. The fastening device 11 is arranged in the first circumferential groove 7c. Thus, the locking ring 11a is arranged in the first circumferential groove 7c. Further, the connector 9.1 has an inner surface provided with a structure 9d that engages with the fastening device 11.1 to maintain an axially fixed position between the connector 9.1 and the electrical insulation layer 7. The structure is arranged on the inner surface along the connector end section 9a. The structure 9d is in the present example a second circumferential groove. The locking ring 11a is thus arranged in the second circumferential groove. The locking ring 11a thus axially locks the connector 9.1 to the electrical insulation layer 7.1.

According to one example, the connector 9.1 may comprise one or more axial channels extending from an end face of the connector end section 9a into the second circumferential groove. The locking ring 11a may comprise one or more radial protrusions 12 arranged to be received by a respective one of the channels. The locking ring 11a may thus be connected to the connector 9.1 by aligning the one or more radial protrusions 12 with the corresponding one or more channels, and then sliding the connector 9.1 axially towards the electrical insulation layer 7.1 such that the radial protrusions 11a enter the second circumferential groove. The connector 9.1 can they be turned or rotated relative to the electrical insulation layer 7.1 such that each radial protrusion 12 is shifted circumferentially from the channel through which it passed into the second circumferential groove. The locking ring 11a and the connector 9.1 may thus be connected by means of a bayonet connection.

When the connector 9.1 has been connected to the electrical insulation layer 7.1, the outer surface of the connector 9.1 may be in level with the outer surface of the main section 7a of the electrical insulation layer 7. The connector 9.1 and the main section 7a of the electrical insulation layer 7.1 thus have the same or essentially the same outer diameter.

The end section 7b of the electrical insulation layer 7.1 may according to one example have a rounded end section edge 9e.

The connector 9.1 has a connector end facing the end section 7b of the electrical insulation layer 7.1. The connector end may have a rounded connector end edge 9e. The rounded connector end edge 9e reduces the risk of scraping e.g., a pre-moulded sleeve made of polymeric material, which may be slid over the connector 9.1 and onto the end section 7b after the connector 9.1 has been mounted to the electrical insulation layer 7.1, when the power cable accessory assembly 1.1 is assembled.

Figs 2-3 show a second example of a power cable accessory assembly 1.2. Like in the first example, the connector 9.2 extends around the end section 7b of the electrical insulation layer 7.2. Hereto, the connector 9.2 has a connector end section 9a extendings around the end section 7b of the electrical insulation layer 7. The way the connector 9.2 and the electrical insulation layer 7.2 are connected to each other to reduce shrinkback is however different from the first example, as will be explained in the following.

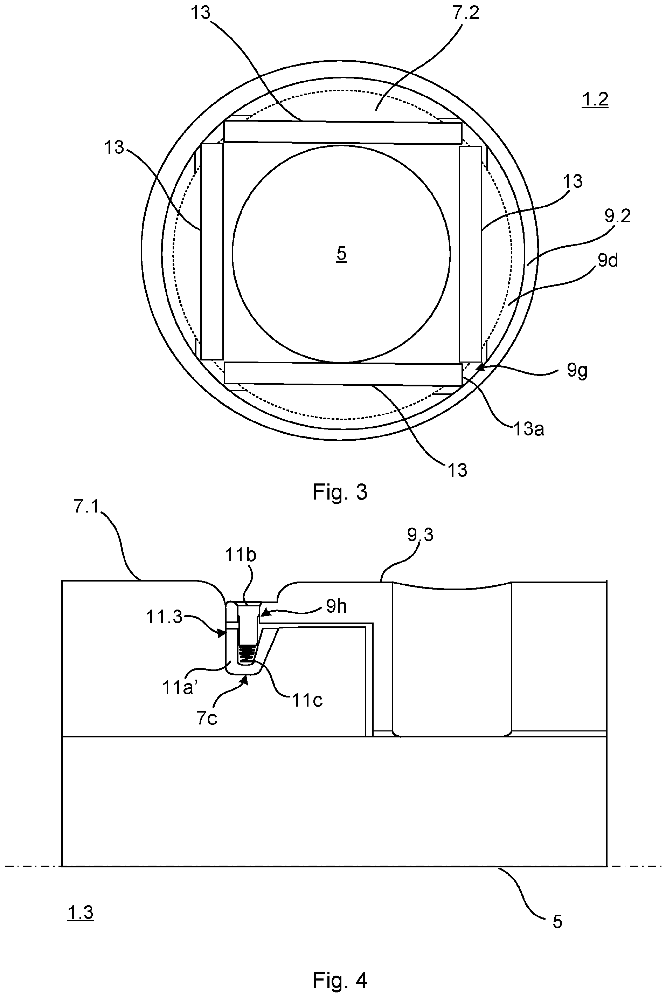

Fig. 3 shows a cross-section of the power cable accessory assembly 1.2 taken along lines A-A in Fig. 2. The fastening device 11.2 comprises a plurality of pins 13. Each pin 13 extends in a tangential direction of the conductor 5 inside the electrical insulation layer 7.2.

According to the second example, the fastening device 11.2 comprises at least three pins 13 arranged such that they in cross-section of the power cable 3 form a polygon or form part of a polygon, for example a rectangle or a triangle. According to the example, the fastening device 11.2 comprises four pins 13 in a rectangular formation.

Each end 13a of each pin 13 protrudes from the electrical insulation layer 7. Each end 13a is received by the structure in the inner surface of the connector 9.2. The structure may comprise the second circumferential groove 9d along the inner surface of the connector 9.2. Further, the structure may comprise axial openings 9g which extend from an axial end of the connector 9.2 and open into the second circumferential groove 9d. When connecting the connector 9.2 with electrical insulation layer 9, the pins 13 may first be inserted into bores in the electrical insulation layer 7.2. Then, the connector 9.2 may be arranged such that the axial openings 9g are aligned with the ends 13a of the pins 13. The connector 9.2 can then be axially slid receiving the ends 13a protruding from the electrical insulation layer 7.2. The ends 13a are thereby received in the second circumferential groove 9d. The connector 9.2 can then be turned such that the ends 13a are shifted in the circumferential direction from the axial openings 9g. The connector 9.2 and the electrical insulation layer 7.2 are thus connected with a bayonet connection.

Fig. 4 shows a third example of a power cable accessory assembly 1.3. The third example is similar to the first example.

The power cable accessory assembly 1.3 comprises a fastening device 11.3. The fastening device 11.3 comprises a locking ring 11a'. The locking ring 11a' may be made up of two halves, or of more than two pieces. This facilitates installation of the fastening device 11.3.

The electrical insulation layer 7.1 has the first circumferential groove 7c. The circumferential groove 7c is arranged in the end section 7b. The locking ring 11a' is arranged in the first circumferential groove 7c.

The connector 9.3 has a structure in the form of one or a plurality of radial through-openings 9h distributed in the circumferential direction of the connector 9.3, which extends or extend through the inner surface of the connector 9.3 as the connector 9.3 envelops the end section 7b of the electrical insulation layer 7.1.

The fastening device 11.3 comprises fasteners 11b screwed radially through the connector 9.3 into mechanical engagement with the locking ring 11a'. Thus, the fasteners 11b extend through respective radial through-openings 9h. The fasteners 11b may for example be screws or bolts.

The fasteners 11b may be spring biased radially outwards. The fastening device 11.3 may thus comprise springs 11c such as coil springs. Each spring 11c may be arranged to bias a respective fastener 11b radially outwards. Each spring 11c' may be arranged in an opening in the locking ring 11a' arranged to receive a fastener 11b.

The fasteners 11b extending through the connector 9.3 and into engagement with the locking ring 11a', which is arranged axially fixed in the first circumferential groove 7c, prevents axial displacement between the connector 9.3 and the electrical insulation layer 7.1.

In the first example and in the third example, the first circumferential groove 7c may according to some examples have a distal wall, with respect to the end face of the electrical insulation layer 7.1, which is perpendicular with respect to an outer surface of the end section 7b. The first circumferential groove 7c may according to some examples have a proximal wall with respect to the end face of the electrical insulation layer 7.1, which is inclined such that the axial width of the first circumferential groove 7c decreases in a direction towards its bottom.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Power cable accessory assembly (1.1; 1.2; 1.3) comprising:
- a power cable (3) comprising:
- a conductor (5), and
- an electrical insulation layer (7.1; 7.2) arranged around the conductor (5),
wherein the electrical insulation layer (7.1; 7.2) has a main section (7a) and an end section (7b), the end section (7b) having a smaller diameter than the main section (7a);
- a fastening device (11.1; 11.2; 11.3) engaging with the electrical insulation layer (7.1; 7.2) in the end section (7b), and
- a connector (9.1; 9.2; 9.3) extending around the end section (7b) of the electrical insulation layer (7.1; 7.2), the connector (9.1; 9.2; 9.3) being mechanically connected to the conductor (5), wherein the connector (9.1; 9.2; 9.3) has an inner surface provided with a structure that engages with the fastening device (11.1; 11.2; 11.3) to maintain an axially fixed position between the connector (9.1; 9.2; 9.3) and the electrical insulation layer (7.1; 7.2).

2. Power cable accessory assembly (1.1; 1.3) as claimed in claim 1, wherein the fastening device (11.1; 11.3) and the connector (9.1; 9.3) are connected by means of a bayonet connection.

3. Power cable accessory assembly (11.1; 11.2; 11.3) as claimed in claim 1 or 2, wherein the connector (9.1; 9.2; 9.3) has an outer surface which is in level with an outer surface of the main section (7a) of the electrical insulation layer (7.1; 7.2).

4. Power cable accessory assembly (1.1; 1.2; 1.3) as claimed in any of the preceding claims, wherein the end section (7b) of the electrical insulation layer (7.1; 7.2) has a rounded end section edge (7d).

5. Power cable accessory assembly (1.1; 1.2; 1.3) as claimed in any of the preceding claims, wherein the connector (9.1; 9.2; 9.3) has a connector end facing the end section (7b) of the electrical insulation layer (7.1; 7.2), wherein the connector end has a rounded connector end edge (9e).

6. Power cable accessory assembly (1.1; 1.3) as claimed in any of the preceding claims, wherein the electrical insulation layer (7.1) has a first circumferential groove (7c), wherein the fastening device (11.1; 11.3) is arranged in the first circumferential groove (7c).

7. Power cable accessory assembly (1.1) as claimed in claim 6, wherein the structure of the inner surface of the connector (9.1) is a second circumferential groove (9d), wherein the fastening device (11.1) is arranged in the second circumferential groove.

8. Power cable accessory assembly (1.1; 1.3) as claimed in claim 6 or 7, wherein the fastening device (11.1; 11.3) comprises a locking ring (11a; 11a').

9. Power cable accessory assembly (1.3) as claimed in claim 8, wherein the fastening device (11.3) comprises fasteners (11b) screwed radially through the connector (9.3) into mechanical engagement with the locking ring (11a).

10. Power cable accessory assembly (1.3) as claimed in claim 9, wherein the fasteners (11a) are spring biased radially outwards.

11. Power cable accessory assembly (1.2) as claimed in any of claims 1-5, wherein the fastening device (11.2) comprises a plurality of pins (13), each pin (13) extending in a tangential direction of the conductor inside the electrical insulation layer (7.2), wherein each end (13a) of each pin (13) protrudes from the electrical insulation layer (7.2), and wherein each end (13a) is received by the structure in the inner surface of the connector (9.2).

12. Power cable accessory assembly (1.3) as claimed in claim 11, wherein the fastening device (11.3) comprises at least three pins (13) arranged such that they in cross-section of the power cable (3) form a polygon or form part of a polygon.

13. Power cable accessory assembly (1.1; 1.2; 1.3) as claimed in any of the preceding claims, wherein the power cable accessory assembly (1.1; 1.2; 1.3) is a cable joint.

14. Power cable accessory assembly (1.1; 1.2; 1.3) as claimed in of claims 1-13, wherein the power cable accessory assembly (1.1; 1.2; 1.3) is a cable termination system.
